# EUROPÄISCHE PATENTANMELDUNG

(11) **EP 2 020 321 A1**
(43) Veröffentlichungstag der Anmeldung: **04.02.2009**
(21) Anmeldenummer: 08012934.9
(22) Anmeldetag: 17.07.2008
(51) Int. Cl.: B60J 5/10

(54) **Kraftfahrzeug mit einer Heckklappe**

(30) Priorität: 28.07.2007 DE 102007035509
(71) Anmelder: Bayerische Motoren Werke Aktiengesellschaft, 80809 München (DE)
(72) Erfinder: Dockweiler, Achim, 81829 München (DE); Rodewald, Michael, 80798 München (DE); Aldersley, Nicholas, 85241 Hebertshausen (DE)

(57) **Zusammenfassung**

Es ist bereits eine Heckklappe für ein Kraftfahrzeug bekannt, die aus einer Scheibe mit einem Einfassrahmen gebildet wird. Der Randbereich der Scheibe und der Einfassrahmen sind mit einem PU-Schaum miteinander verbunden. Der Einfassrahmen besteht am quer verlaufenden oberen Rand der Heckklappe aus einem Strangpressprofil, im seitlichen außen liegenden, längsgerichteten Bereich wird der Einfassrahmen durch ein profiliertes Blechteil gebildet. Aufgabe der Erfindung ist es, eine Heckklappe, die eine Scheibe mit zumindest einem Verstärkungsbauteil aufweist, so zu gestalten, dass sie kostengünstig herstellbar ist.

Erfindungsgemäß weist eine Heckklappe (1) eine Scheibe (2) mit zumindest einem Verstärkungsbauteil (3) auf, wobei ein Randbereich der Scheibe (2) und das Verstärkungsbauteil (3) miteinander mit einem PU-Schaum (4) verbunden sind. Das zumindest eine Verstärkungsbauteil (3) besteht aus einem Gussbauteil. Gussbauteile haben gegenüber Blechbauteilen und gegenüber Strangpressprofilen den Vorteil, dass sie lokale Verdickungen und Versteifungen aufweisen können, sodass eine beanspruchungsgerechte Auslegung möglich ist. Zudem ist das erforderliche Invest für ein Blechwerkzeug deutlich höher als für ein Gusswerkzeug.

## Beschreibung

Die Erfindung betrifft ein Kraftfahrzeug mit einer Heckklappe nach dem Oberbegriff des Patentanspruchs 1.

Aus der EP 0 428 837 A2 ist bereits eine Heckklappe für ein Kraftfahrzeug bekannt, die aus einer Scheibe mit einem Verstärkungsrahmen gebildet wird. Der Randbereich der Scheibe und der Verstärkungsrahmen sind mit einem PU-Schaum miteinander verbunden. Der Verstärkungsrahmen besteht am quer verlaufenden oberen Rand der Heckklappe aus einem Strangpressprofil, im seitlichen außen liegenden, längsgerichteten Bereich wird der Verstärkungsrahmen durch ein profiliertes Blechteil gebildet. Im unteren quer verlaufenden Bereich der Heckklappe besteht der Verstärkungsrahmen aus zwei Blechpressteilen.

Aufgabe der Erfindung ist es, eine Heckklappe, die eine Scheibe mit zumindest einem Verstärkungsbauteil aufweist, so zu gestalten, dass sie kostengünstig herstellbar ist.

Diese Aufgabe wird mit einem Kraftfahrzeug mit einer Heckklappe mit den Merkmalen des Patentanspruchs 1 gelöst.

Erfindungsgemäß weist eine Heckklappe eine Scheibe mit zumindest einem Verstärkungsbauteil auf, wobei ein Randbereich der Scheibe und das Verstärkungsbauteil miteinander mit einem PU-Schaum verbunden sind. Derartige Verbindungen mit einem Polyurethan-Schaum (PU-Schaum) sind heute weit verbreitet. Sie sind insbesondere von Glasschiebedächern her allgemein bekannt. Das zumindest eine Verstärkungsbauteil besteht aus einem Gussbauteil. Gussbauteile haben gegenüber Blechbauteilen und gegenüber Strangpressprofilen den Vorteil, dass sie lokale Verdickungen und Versteifungen aufweisen können, sodass eine beanspruchungsgerechte Auslegung möglich ist. Bei Blechbauteilen muss dagegen die Blechdicke nach der lokal höchsten Belastung ausgelegt werden. Aufgrund des kleinen Bauraums und der erforderlichen Steifigkeiten werden dazu oft Stahlbleche verwendet, die wiederum ein großes Gewicht ergeben. Das Gussbauteil dagegen kann so gestaltet sein, dass es nur an den Stellen mit der höchsten Beanspruchung entsprechend dick und damit steif ist, während es in den Bereichen mit niedrigeren Beanspruchungen dünner gestaltet sein kann, sodass das erfindungsgemäße Gussbauteil leichter als die bekannten Verstärkungsbauteile ist. Zudem ist das erforderliche Invest für ein Blechwerkzeug deutlich höher als für ein Gusswerkzeug. Da solche Heckklappen, die im Wesentlichen nur aus einer Scheibe mit zumindest einem Verstärkungsbauteil bestehen, in der Regel bei Fahrzeugen mit kleiner Stückzahl Anwendung finden, ist es für die Gesamtkosten der Heckklappe maßgeblich, die Werkzeugkosten möglichst gering zu halten. Zudem können in ein Gussbauteil weitere Funktionen integriert werden. So kann das Gussbauteil beispielsweise Aufnahmedome oder Befestigungspunkte für die Scharniere aufweisen. Auch ist die Maßhaltigkeit höher als bei Blechbauteilen oder Strangpressprofilen, sodass sich der Einstellaufwand bei der Montage der Heckklappe vermindert oder sogar völlig entfällt. Dies trägt ebenfalls zur Kostenreduktion bei.

Bevorzugt bildet das Verstärkungsbauteil einen geschlossenen Rahmen. Dies ist bei derartigen Heckklappen zum Erreichen der erforderlichen Steifigkeit häufig erforderlich. Bei den bekannten Heckklappen wurde dazu der Rahmen aus mehreren Blechbauteilen oder mehreren Strangpressprofilen zusammengesetzt. Dabei gilt, dass die zu erwartende Toleranz um so größer ist, je mehr Teile miteinander gefügt werden müssen. Das erfindungsgemäße Gussbauteil dagegen kann den gesamten geschlossenen Rahmen einteilig bilden. Dies reduziert die Anzahl der Verstärkungsbauteile und erhöht somit die Maßhaltigkeit.

Weitere vorteilhafte Ausgestaltungen sind Gegenstand von Unteransprüchen.

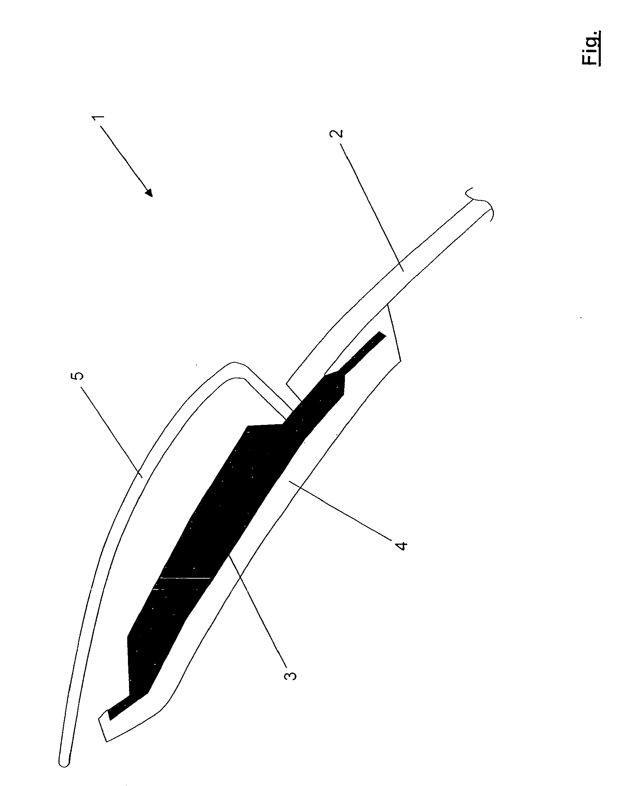

In der Zeichnung ist ein Ausführungsbeispiel der Erfindung dargestellt, anhand dessen die Erfindung im Folgenden näher beschrieben wird. Die einzige Figur zeigt in schematischer Darstellungsweise einen Längsschnitt durch eine Heckklappe eines Kraftfahrzeugs.

In der einzigen Figur ist der obere Teil einer Heckklappe 1 eines Personenkraftwagens der Kombinationsbauart gezeigt. Der gezeigte Längsschnitt schneidet die Heckklappe 1 genau in der Fahrzeugmitte. Die Heckklappe 1 wird gebildet durch eine Scheibe 2 und einem Verstärkungsrahmen 3 als Verstärkungsbauteil, der sich umlaufend entlang des Randbereichs der Scheibe 2 erstreckt. Der Randbereich der Scheibe 2 und der Verstärkungsrahmen 3 sind mit einem PU-Schaum 4 umschäumt, der sie miteinander fest verbindet. Im dargestellten oberen Bereich der Heckklappe 1 ist ein Heckspoiler 5 an der Heckklappe 1 angebracht, der einen aerodynamisch günstigen und optisch ansprechenden Übergang zwischen dem an die Heckklappe 1 angrenzenden Fahrzeugdach und der Heckklappe 1 selber schafft. Dieser Heckspoiler 5 ist an den beiden seitlichen Randbereichen mit dem Verstärkungsrahmen 3 verbunden. Die Heckklappe 1 ist um eine oben angeordnete Schwenkachse aufklappbar. Dazu ist sie beidseitig jeweils mit einem Scharnier mit der Karosserie des Personenkraftwagens verbunden. Die Scharniere sind über den Verstärkungsrahmen 3 mit der Heckklappe 1 verbunden.

Der gesamte Verstärkungsrahmen 3 besteht einstückig aus einem Gussbauteil. Dadurch weist der Verstärkungsrahmen 3 eine wesentlich höhere Maßhaltigkeit auf als die aus dem Stand der Technik bekannten Verstärkungsrahmen, die aus mehreren Blechumformteilen oder Strangpressprofilen zusammengesetzt sind. Zudem kann der gegossene Verstärkungsrahmen 3 mit nachfolgenden Umformprozessen, wie beispielsweise durch Nachformen, an die tatsächlichen Bauraumverhältnisse angepasst werden.

Der Verstärkungsrahmen 3 weist lokal einzelne Verstärkungen auf, sodass er in diesen Bereichen besonders steif ist. Diese lokalen Verstärkungen sind gezielt in den Bereichen angeordnet, die besonders hohe Kräfte aufnehmen müssen. Dazu zählen beispielsweise die Bereiche, in denen die Scharniere an den Verstärkungsrahmen 3 angebunden sind. Die zur Befestigung der Scharniere am Verstärkungsrahmen 3 erforderlichen Schraubdome sind ebenfalls mit angegossen, sodass für die Befestigung der Scharniere keine zusätzlichen Bauteile erforderlich sind.

Der als Gussbauteil gestaltete Verstärkungsrahmen 3 ist leichter als die bekannten Verstärkungsrahmen, da die Steifigkeit und damit die erforderlichen Wandstärken und Querschnitte nur in den Bereichen vorgesehen sind, in denen tatsächlich entsprechend hohe Kräfte aufgenommen werden müssen. Zudem kann das Gussbauteil aus einem Leichtmetall, wie beispielsweise Aluminium, Magnesium oder einer Aluminium- oder Magnesiumlegierung bestehen, wodurch sich das Gewicht des Verstärkungsrahmens 3 noch zusätzlich reduziert.

## Patentansprüche

1. Kraftfahrzeug mit einer Heckklappe (1), die eine Scheibe (2) mit zumindest einem Verstärkungsbauteil (3) aufweist, wobei ein Randbereich der Scheibe (2) und das Verstärkungsbauteil (3) miteinander mit einem PU-Schaum (4) verbunden sind, **dadurch gekennzeichnet, dass** das Verstärkungsbauteil (3) aus einem Gussbauteil besteht.

2. Kraftfahrzeug nach Anspruch 1, **dadurch gekennzeichnet, dass** das Verstärkungsbauteil (3) zur Anbindung zumindest eines Scharniers dient.

3. Kraftfahrzeug nach Anspruch 2, **dadurch gekennzeichnet, dass** die für das zumindest eine Scharnier erforderlichen Anbindungspunkte am Verstärkungsbauteil (3) angegossen sind.

4. Kraftfahrzeug nach einem der vorhergehenden Ansprüche, **dadurch gekennzeichnet, dass** das Verstärkungsbauteil (3) aus einem Leichtmetall oder einer Leichtmetalllegierung besteht.

5. Kraftfahrzeug nach einem der vorhergehenden Ansprüche, **dadurch gekennzeichnet, dass** das Verstärkungsbauteil (3) einen einteiligen, geschlossenen Rahmen bildet.
